## Europäisches Patentamt
## European Patent Office
## Office européen des brevets

(19)

(11) Publication number: **0 030 793**

A1

(12) # EUROPEAN PATENT APPLICATION

(21) Application number: **80304088.0**

(22) Date of filing: **14.11.80**

(51) Int. Cl.³: **B 32 B 27/08**
**A 01 G 13/02, A 01 M 17/00**

(30) Priority: **13.12.79 US 102728**

(43) Date of publication of application:
**24.06.81 Bulletin 81/25**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Gemgnani, Gregory**
**209 Buckland Avenue**
**Rochester New York 14618(US)**

(74) Representative: **Cooper, John Anthony et al,**
**Mobil Court 3 Clements Inn**
**London WC2A 2EB(GB)**

(54) Thermoplastic films for soil treatment and method of maintaining fumigants in contact with soil.

(57) Thermoplastic films comprising laminates of polyethylene and a relatively thinner nylon layer are employed as protective coverings over agricultural fields, which have been treated with fumigants. The improved resistance to fumigant vapor penetration of such laminates results in improved retention of the volatile fumigant materials in contact with the soil which is being treated.

EP 0 030 793 A1

Croydon Printing Company Ltd.

F-0386                          - 1 -

### THERMOPLASTIC FILMS FOR SOIL TREATMENT

The present invention relates to laminar plastic
films such as laminates of high density polyethylene with
nylon.  Such films are particularly suited for protecting
soils which have been previously treated with fumigants
such as methyl bromide and chloropicrin, preventing
escape of the applied fumigants until they have
completely saturated the soil being treated.

Soil fumigation is employed extensively in
certain growing areas in order to pretreat soil prior to
planting in an effort to eradicate or reduce inoculum of
soil pathogens.  In some instances, soils are fumigated
when specific diseases that cause unacceptable losses
occur.  Generally, soil fumigation is employed to treat
soil which is to be planted with so called high risk-high
value crops including for example, tobacco, strawberries,
tomatoes, ornamental plants, and the like.  It has been
found that in the absence of such fumigation treatment,
buildup of soil-born diseases that attack the root
systems of such crops will occur and cause unacceptable
crop losses.  Agricultural soils are routinely fumigated
with volatile chemicals such as methyl bromide or
mixtures of methyl bromide with chloropicrin.  These
gases are injected into the soil to be treated with
commercially available equipment.  Because it may take up
to 48 hours, and in some cases a week or more, following
treatment before the gases have effectively saturated the
soil , and in view of the fumigants' high toxicity as
well as its relatively high cost, it is desirable that
the fumigant-treated soil be completely covered with a
barrier material such as for example, a thermoplastic
sheet, immediately after it has been injected into the
soil.

F-0386                          - 2 -

        Currently in agricultural fumigation of soils,
the barrier film which is most commonly employed is a low
density polyethylene sheeting.  However, it has been
found that the conventional low density polyethylene
films currently used as fumigant barriers offer only very
limited resistance to the penetration of the fumigant
vapors so that approximately 1/2 to 2/3 of the fumigant
gas, such as methyl bromide and/or chloropicrin, after
being applied to a field, escapes through the low density
polyethylene barrier film.  In addition to the attendant
expense of the lost fumigant, there is increased concern
regarding the adverse environmental aspects of soil
fumigation and the escape into the atmosphere of such
highly toxic gases.  More stringent regulations limiting
atmospheric emissions of this type may be forthcoming
from regulatory agencies in the future.  Another obvious
disadvantage of escaping fumigants is the potential
health hazards which are posed to individuals working in
the immediate area, as well as residential areas which
may surround farms employing such hazardous and toxic
fumigant materials.  Attempts to replace low density
polyethylene films, because of its poor barrier
characteristics, with other materials such as polyester
films, saran films and the like, all of which offer some
improved barrier characteristics over monolayer low
density polyethylene, have met with little success in
view of the economic disadvantages attendant with the
employment of such costly film substitutes.
Unfortunately, until the advent of the present invention,
monolayer low density polyethylene film has been the only
effective film available in the quantity, cost, and with
the physical strength requisites  required for commercial
fumigation.

A basic objective of the present invention is to provide effective soil fumigation with a minimum disturbance of the environment. Accordingly the present invention provides a retentive soil cover of high mechanical strength which allows the quantity of toxic fumigant chemicals employed to be reduced by upwards of fifty percent of the quantities which are currently employed when low density polyethylene alone is used as the barrier film. These objectives are met when, in accordance with the present invention, a barrier film is provided in the form of a laminate comprising a layer of polyethylene having bonded thereto a thin coating layer of nylon-6. It has been found that when such a film is employed as a barrier covering over fumigated soil areas, escape of the volatile fumigant gases is dramatically reduced in comparison to when low density polyethylene coverings are utilized. The laminar films of the present invention may be formed by extrusion coating a preformed film, e.g. polyethylene, with a thin coating of nylon-6. Alternatively, the films may be preformed by extrusion and subsequently laminated together in the presence of adhesive materials, and the like. A still further method for producing polyethylene-nylon 6 laminates comprising coextrusion, tubular or cast, of respective layers of the molten resinous materials through a common die orifice, utilizing coextrusion techniques which are well known to those skilled in the art. This latter technique of coextrusion is the preferred method for the production of the present laminates, although other hereinbefore described techniques may also be employed.

Nylon is a generic name for polyamide polymers characterized by the presence of the amide group (CONH). Nylon-6, the grade of nylon used in the present invention, is a polymer of caprolactam.

Commercially employed fumigating techniques will vary according to the soil being treated, the nature of the terrain, the crop for which the field is being prepared, and the nature of the problem the fumigation is intended to attack, for example a fungus, insect, bacteria or weed. Commercially available fumigating equipment includes vehicles such as a full-tracked tractor upon which may be mounted a series of tanks containing the various fumigants being used. Metering devices measure selected dosages of fumigants which are drilled or injected into the soil as the tractor moves across the field. Attached to the same tractor and positioned behind the fumigant injectors, is a unit which carries the rolls of plastic barrier film. The film dispenser unit covers over the ground as soon as the fumigants are applied, thereby minimizing the escape of the applied fumigants. The nylon-polyethylene coextruded films of the present invention provide exceptional gas barrier resistance and the mechanical strength required for such field applications.

The optimum thickness of the laminar barrier films of the present invention is generally dependent upon factors which include resin costs, effective barrier properties, mechanical strength necessary for handling in field applications, and similar considerations. Gauges in excess of 300 microns (10 mils) for example, while providing effective barrier properties, may present problems in handling and application to the soil being treated. It has been found that the laminar structures of the present invention when employed in thicknesses of from 10 microns (0.5 mil) to 80 microns (3 mils), and preferably from 30 to 50 microns (1 to 2 mils) are quite effective. The ratio of nylon layer thickness to high density polyethylene layer thickness may vary widely.

However, preferred thickness ratios of nylon to polyethylene are from about 1:40 up to about 1:4, and preferably about 1:9. In the following Example, a nylon 6-high density polyethylene laminate having an overall thickness of about 33 microns (1.3 mils) was prepared. The nylon layer was approximately 3 microns (0.1 mil) and the high density polyethylene layer was about 31 microns (1.2 mils). It has been found that the chemical resistance of the nylon, even in gauges as low as 3 microns (0.1 mil), significantly improves the barrier resistance of the resultant laminates in contrast to the conventional low density polyethylene single layer films which are currently commercially employed.

The following Example sets forth one of the coextrusion techniques which may be employed to produce the barrier laminate films of the present invention. In the Example a laminate comprising high density polyethylene and nylon was prepared. However it will be understood that other forms of polyethylene, including low density polyethylene and copolymers thereof and high density polyethylene homopolymers may also be employed.

## EXAMPLE 1

High density polyethylene resin blended with approximately 8% of an ionomer resin identified by the manufacturer as Surlyn were fed into the hopper of a standard thermoplastic extruder. The Surlyn resin was employed in the present Example as an adhesion promoting agent which enhances the bonding characteristics of the high density polyethylene resin layer to the applied nylon-6 layer. The high density polyethylene resin employed was a copolymer of ethylene and about 3% by weight of octene-1. This resin is identified by the manufacturer as Alathon 7810, and has the following typical physical properties for a 31 microns (1.2 mil) film extruded at a 4.3:1 blow-up ratio:

Density .945 g/cc
Melt Index .25 g/10 min.

| | | | |
|---|---|---|---|
| Tensile Yield | (MD) | $2 \times 10^4$ kPa | (3,000 psi) |
| | (TD) | $2.1 \times 10^4$ kPa | (3,100 psi) |
| Elongation | (MD) | 660% | |
| (2"/min.) | (TD) | 730% | |
| Secant Modulus | (MD) | $5.5 \times 10^5$ kPa | (80M psi) |
| | (TD) | $5.7 \times 10^5$ kPa | (82M psi) |
| Elmendorf Tear | (MD) | 1.8 g/micron | (45 g/mil) |
| | (TD) | 9.7 g/micron | (250 g/mil) |
| Spencer Impact | | $1.2 \times 10^{-2}$ Nm/micron | (2.8 in. lbs/mil) |
| Dart Drop (26") | | 4.53 g/micron | (115 g/mil) |
| Tear Propagation | (MD) | 3.2 Kg force | |
| ASTM D-2582 | (TD) | 3.7 Kg force | |

The Surlyn, ionomer adhesion promoter resin, employed is of the type disclosed and described in detail in U.S. Patent No. 3,496,061.

Nylon-6 resin was introduced into a satellite extruder and molten nylon resin was fed into the same tubular die as the high density polyethylene-Surlyn mixture.

The nylon-6 resin was identified by the manufacturer as CAPRON 8207, and had the following physical properties:

Density                     1.13 g/cc
Tensile, Yield              $8.14 \times 10^4$ kPa  (11,800 psi)
                                 (ASTM-D-638)
Deflection Temperature      $60^{\circ}$C  ($140^{\circ}$F.) (ASTM-D-648)
                                 at $1.82 \times 10^3$ kPa  (264 psi)
                                 stress


   The resultant two ply laminated film produced
in accordance with the present Example comprised
adhered layers of the high density ethylene-octene-1
copolymer/ionomer mixture layer and the relatively
thin nylon-6 layer, and had the following properties:

| Film Gauge | | 30 microns | (1.0 mil.) |
|---|---|---|---|
| Blow-up Ratio | | 4/1 | |
| Tensile, Ultimate | (MD) | $5.63 \times 10^4$ kPa | (8170 psi) |
| | (TD) | $3.0 \times 10^4$ kPa | (4400 psi) |
| Tensile, Yield | (MD) | $1.9 \times 10^4$ kPa | (2800 psi) |
| | (TD) | $2 \times 10^4$ kPa | (3000 psi) |
| Elongation | (MD) | 560% | |
| | (TD) | 480% | |
| Tear-Elmendorf | (MD) | 1.1 g/micron | (28 g/mil) |
| | (TD) | 17 g/micron | (440 g/mil) |
| Thickness of HDPE layer | | 31 microns | 1.2 mils |
| Thickness of nylon layer | | 3 microns | 0.1 mil |


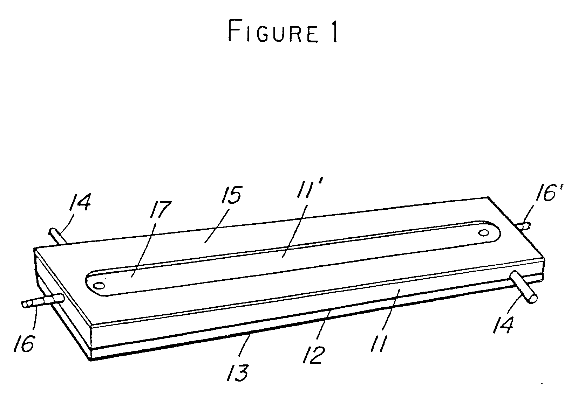

   The film produced in accordance with Example 1
was tested for its resistance to the diffusion of
methyl bromide and chloropicrin therethrough.  The
following is a description of the apparatus, as shown
in FIGURE 1, which was employed to test the diffusion rates of the laminates produced in accordance with Example 1, and also to compare them with commercially available low density polyethylene films which are currently employed as fumigant barriers.

As shown schematically in FIGURE 1 the diffusion testing apparatus consisted of two units, a top unit, not shown, which is an exact mirror image of the bottom unit illustrated in FIGURE 1. The device comprises an aluminum plate 11, hollowed on its backside surface by machine milling and having a flat face 11'. Rubber gasket 12 and plate 13 are attached to the undersurface of aluminum plate 11 with screws (not shown) around the perimeter of the hollow backside of plate 11 to provide a water tight seal. Inlet valve 16 and outlet valve 16' are located at opposite ends of plate 11 and are provided for the circulation of temperature controlled water. The mating half of the apparatus (not shown), which is a mirror image of the apparatus shown in FIGURE 1, was connected in series to complete the water circuit. Polyethylene separation sheet 15, into which is cut an oblong hole 17, hole 17 being the active area of diffusion, is adhesively secured to the face 11' of plate 11.

In operation, a piece of film to be tested was stretched across the face of the polyethylene sheet 15. The mating plate (not shown) was subsequently interfaced and the two were then pressed together with C clamps to provide a gas-tight seal. Water circulation was begun at room temperature ($25^{O}$C) and a known concentration of methyl bromide in air, flowing at 20 ml/min., was attached to inlet valve 16 of the lower plate. The gas flowed across the open hollow space of plate 11' and was vented through outlet valve 16'. To the inlet valve 16 of the upper plate was attached a supply of clean air, also flowing at the rate of 20 ml/min., flowing in a direction opposite the gas flow in the lower plate. The air and any diffused methyl bromide contained therein, existing through oulet valve 11 of the upper plate, was conducted via stainless tubing to a gas chromatograph (not shown) for periodic analysis.

When equilibrium diffusion was attained, indicated by a series of gas chromatograph recorder peaks of equal height, the water temperature was increased to $30^{O}C$ and measurements made until a steady state was again attained. In successive steps, the temperature was raised to 40, 50 and finally to $60^{O}C$. Such temperature conditions are likely to be encountered in the field at the barrier film surfaces. The diffusion tests for chloropicrin were identical to those for methyl bromide.

The following Table I sets forth the numerical results of the testing. The values are expressed as ml/liter of gas diffusing per hour, per square meter, per mil. For comparison, diffusion values for a typical one mil low density polyethylene film are included in the following Table. The gas concentrations for the testing were 40 ml of methyl bromide per liter of air and 22 ml of chloropicrin per liter of air.

TABLE I

| 33 micron HDPE/nylon (3 micron nylon) (1.3-mil HDPE/nylon [.1 mil nylon]) | | | | 3 micron (1-mil) LDPE | |
|---|---|---|---|---|---|
| Temperature | methyl bromide | | Chloropicrin | methyl bromide | Chloropicrin |
| 25°C | 0.02  0.06  0.04 | | nil * | 8.9 | |
| 30 | 0.06  0.08  0.07 | | " | 12.9 | 55.5 |
| 40 | 0.11  0.16  0.14 | | " | 20.0 | 68.3 |
| 50 | 0.28  0.29  0.28 | | " | 27.3 | 70.7 |
| 60 | 0.51  0.50  0.51 | | " | 33.9 | 98.4 |

* Test piece of film programmed: 2 hr at 25°, 1 hr at each of the other temp, 16 hr (overnight) at 40°, and 1 hr at 60°.  Diffused chloropicrin not measurable.

It will be seen from the foregoing Table, when contrasted with conventional monolayer low density polyethylene barrier films, the nylon-polyethylene laminates of the present invention provide vastly superior resistance to diffusion of methyl bromide and chloropicrin therethrough.

WHAT IS CLAIMED IS:

1.  An agricultural fumigant barrier film, comprising a laminate  of a polyethylene film and a nylon-6 coating layer.

2.  The laminate of claim 1 wherein said polyethylene is high density polyethylene.

3.  The laminate of claim 2 wherein said high density polyethylene is a copolymer of ethylene with a minor amount of octene-1.

4.  The laminate of claim 1 wherein said polyethylene contains a minor amount of an ionomer resin blended therein.

5.  The laminate of claim 1 wherein said nylon-6 layer comprises no more than 20% of the overall thickness of said laminate.

6.  A method for maintaining volatile agricultural fumigants in intimate contact with soil which comprises injecting said fumigants into said soil and subsequently covering the fumigant treated soil with a laminar film comprising a layer of polyethylene having adhered thereto a layer of nylon-6.

1502N

## FIGURE 1

| | European Patent Office | EUROPEAN SEARCH REPORT | Application number |
|---|---|---|---|
| | | | EP 80 30 4088 |

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | US - A - 3 697 368 (M. BHUTA)  *  claims 1,4,5; column 1, line 37 - column 2, line 44; column 3, line 67 - column 5, line 20; example 2; figure 4 *  -- | 1-6 | B 32 B 27/08 A 01 G 13/02 A 01 M 17/00 |
| | US - A - 3 339 234 (K. UTZ)  *  column 1, lines 38-40; column 9, lines 30-42; examples 1,2,6 *  -- | 1,2,5, 6 | |
| A | FR - A - 2 201 034 (P. SEISSON) | | TECHNICAL FIELDS SEARCHED (Int Cl.3) |
| A | GB - A - 1 295 656 (DU PONT) | | |
| A | GB - A - 914 411 (KALLE A.G.)  ------ | | B 32 B A 01 G 13/02 A 01 M 17/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search The Hague | Date of completion of the search 23-03-1981 | Examiner ELASBAND | |

EPO Form 1503.1  06.78